# EUROPEAN PATENT APPLICATION

(11) **EP 4 851 875 A1**
(43) Date of publication of application: **09.12.2026**
(21) Application number: 25195179.4
(22) Date of filing: 11.08.2025
(51) Int. Cl.: G06N 20/00, G06Q 10/06, G06N 5/043, G05B 19/418, H04L 41/046

(54) **METHOD FOR AI AGENT COORDINATION IN MANUFACTURING WORKFLOWS**

(30) Priority: 03.06.2025 EP 25180536
(71) Applicant: Siemens Aktiengesellschaft, 80333 München (DE)
(72) Inventor: Sauer, Markus, 81739 München (DE); Singh, Saurabh Narayan, 81739 München (DE)
(74) Representative: Siemens Patent Attorneys

(57) **Abstract**

The present disclosure provides a computer-implemented method for coordinating task-specific artificial intelligence (AI) agents in a manufacturing workflow. The method includes identifying a plurality of task clusters (10) in the manufacturing workflow, and for each task cluster, mapping an Al agent from a repository of Al agents to the task cluster or creating a new Al agent for the task cluster (20) with the help of a main Al model. The method further includes deploying the Al agent to an edge device associated with the task cluster (30). The method preferably includes monitoring performance of the deployed Al agents and collecting feedback data (40), and adapting or replacing at least one of the deployed Al agents based on the collected feedback data (50).

## Description

The invention relates to artificial intelligence systems for industrial automation, and more particularly to a method for dynamically generating and coordinating task-specific Al agents in manufacturing workflows.

Artificial intelligence (AI) has become increasingly prevalent in industrial automation and manufacturing processes. Al systems can assist in various aspects of manufacturing workflows, including quality control, predictive maintenance, and process optimization. These systems typically rely on machine learning models trained on large datasets to perform specific tasks within the manufacturing environment.

Traditional approaches to implementing Al in manufacturing often involve deploying pre-trained models for specific tasks. However, these models may not always be well-suited to the unique conditions and requirements of individual manufacturing environments. Additionally, as manufacturing processes evolve and new challenges arise, static Al models may struggle to adapt and maintain optimal performance.

Another challenge in implementing Al for manufacturing is the need for real-time decision-making at the edge, close to the physical processes being monitored or controlled. This requires Al models that can operate efficiently on edge devices with limited computational resources while still providing accurate and timely insights.

Furthermore, complex manufacturing workflows often involve multiple interconnected processes and tasks. Coordinating Al systems across these various tasks and ensuring seamless integration with existing manufacturing systems can be difficult. This complexity is compounded by the dynamic nature of manufacturing environments, where task requirements and priorities may change rapidly.

It has been appreciated that a method is needed that overcomes one or more of these problems.

It is therefore the object of the present invention to provide a method for coordinating task-specific artificial intelligence (AI) agents in a manufacturing workflow that overcomes one or more of the problems associated with existing solutions.

This object of the present invention is solved with a method for coordinating task-specific artificial intelligence (AI) agents in a manufacturing workflow with the features contained in claim 1.

Advantageous aspects of the invention are contained in the subsequent dependent claims, the following description and the drawing.

In a first aspect of the invention, a computer-implemented method for coordinating task-specific artificial intelligence (AI) agents in a manufacturing workflow is provided. The method includes identifying a plurality of task clusters in the manufacturing workflow; for each task cluster of the plurality of task clusters with the help of a main Al model: mapping an Al agent from a repository of Al agents to the task cluster or creating a new Al agent for the task cluster; deploying the Al agent to an edge device associated with the task cluster; preferably monitoring performance of the deployed Al agents and collecting feedback data; and preferably adapting or replacing at least one of the deployed Al agents based on the collected feedback data.

This method provides a dynamic and adaptive approach to managing Al agents in a manufacturing workflow, allowing for efficient allocation of resources and continuous improvement of task performance. The use of task clusters and a main Al model enables intelligent decision-making in agent selection and deployment, while the feedback loop ensures ongoing optimization.

In another advantageous aspect of the method according to the invention, the method further includes fine-tuning the Al agent based on specific environmental conditions and requirements of the task cluster before deploying the Al agent.

This fine-tuning process enhances the performance of Al agents by tailoring them to the specific needs of each task cluster, resulting in improved efficiency and accuracy in task execution.

In another advantageous aspect of the method according to the invention, identifying the plurality of task clusters comprises categorizing tasks based on at least one of: request priority, task complexity, geographical location, environmental factors, and historical trends.

This comprehensive categorization approach ensures that task clusters are formed based on relevant factors, leading to more effective Al agent assignment and overall workflow optimization.

In another advantageous aspect of the method according to the invention, the main Al model is configured to: analyze characteristics of each task cluster; determine optimal Al agent configurations for each task cluster; coordinate interactions between multiple Al agents across different task clusters; and continuously learn and adapt based on feedback from deployed Al agents.

The capabilities of the main Al model enable sophisticated management of the entire Al agent ecosystem, facilitating seamless coordination and ongoing improvement of the manufacturing workflow.

In another advantageous aspect of the method according to the invention, mapping the Al agent comprises: analyzing requirements of the task cluster; and searching the repository for an Al agent that matches the requirements of the task cluster.

This systematic approach to agent mapping ensures that the most suitable Al agent is selected for each task cluster, maximizing the efficiency of the overall workflow.

In another advantageous aspect of the method according to the invention, creating the new Al agent comprises: selecting a generic Al model from a pool of generic Al models; and training the generic Al model using task-specific data to create the new Al agent.

This process of creating new Al agents allows for the development of highly specialized agents when existing ones are not suitable, ensuring that all task clusters are adequately addressed.

In another advantageous aspect of the method according to the invention, fine-tuning the Al agent comprises: adjusting parameters of the Al agent based on historical data from a digital twin of the manufacturing workflow.

The use of digital twin data for fine-tuning enables more accurate and context-aware Al agents, leading to improved performance in real-world manufacturing scenarios.

In another advantageous aspect of the method according to the invention, deploying the Al agent comprises: configuring the Al agent based on available computing resources of the edge device.

This resource-aware deployment ensures optimal utilization of edge device capabilities, preventing performance bottlenecks and enhancing overall system efficiency.

In another advantageous aspect of the method according to the invention, configuring the Al agent comprises performing at least one of: model pruning, quantization, and knowledge distillation.

These advanced configuration techniques allow for the optimization of Al agents to fit within the constraints of edge devices while maintaining performance levels.

In another advantageous aspect of the method according to the invention, the method further includes defining a workflow for collaboration between multiple Al agents deployed to different task clusters.

This collaborative workflow definition enables seamless interaction between Al agents, facilitating complex task execution across multiple clusters and improving overall manufacturing efficiency.

In another advantageous aspect of the method according to the invention, adapting the at least one deployed Al agent comprises: further fine-tuning the at least one deployed Al agent based on the collected feedback data.

This continuous adaptation process ensures that Al agents remain optimized for their assigned tasks, even as conditions in the manufacturing environment change over time.

In another advantageous aspect of the method according to the invention, replacing the at least one deployed Al agent comprises: selecting a different Al agent from the repository that better matches updated requirements of the corresponding task cluster.

This replacement mechanism allows for dynamic adjustment of the Al agent ecosystem, ensuring that the most suitable agents are always deployed for each task cluster.

In another advantageous aspect of the method according to the invention, the method further includes simulating performance of the Al agent using a digital twin of the manufacturing workflow before deploying the Al agent.

This simulation step provides a risk-free way to evaluate Al agent performance, allowing for optimization and issue resolution before real-world deployment.

In a second aspect, a computer program comprising instructions which, when executed by a computer, cause the computer to carry out the method of coordinating task-specific artificial intelligence (AI) agents in a manufacturing workflow is provided.

This computer program aspect enables the implementation of the inventive method in various computing environments, facilitating widespread adoption and integration into existing manufacturing systems.

In a third aspect, a computer-readable medium comprising instructions which, when executed by a computer, cause the computer to carry out the method of coordinating task-specific artificial intelligence (AI) agents in a manufacturing workflow is provided.

This computer-readable medium aspect allows for easy distribution and installation of the inventive method across different computing platforms.

In a fourth aspect, a system for dynamically generating and coordinating task-specific artificial intelligence (AI) agents in a manufacturing workflow is provided. The system includes a processor and a memory comprising instructions stored thereon which, when executed by the processor, cause the system to perform the method of coordinating task-specific artificial intelligence (AI) agents in a manufacturing workflow.

This system aspect provides a complete hardware and software solution for implementing the inventive method, enabling manufacturers to easily integrate the Al agent coordination capabilities into their existing infrastructure.

In another advantageous aspect of the system according to the invention, the system further includes a plurality of edge devices, each edge device associated with a task cluster and configured to execute a deployed Al agent.

This distributed edge device architecture allows for efficient execution of Al agents close to the point of data generation and task execution, reducing latency and improving overall system responsiveness in the manufacturing workflow.

In the following, the invention is described in more details with the help of the accompanying drawings, in which:

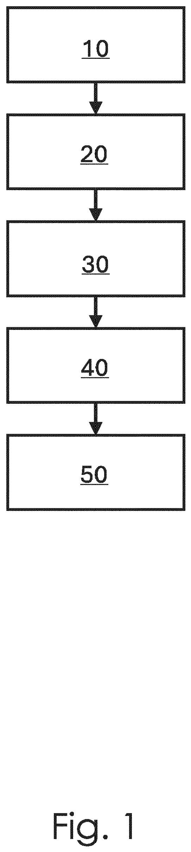

Fig. 1 schematically illustrates a flowchart for a method of coordinating task-specific Al agents in a manufacturing workflow, according to aspects of the present disclosure. Common reference numerals are used throughout the figures to indicate similar features.
Fig. 1 illustrates a flowchart for a method of coordinating task-specific artificial intelligence (AI) agents in a manufacturing workflow. The method begins with a step of identifying a plurality of task clusters 10 in the manufacturing workflow. Following the identification of task clusters, the method proceeds to a step of mapping AI agents to task clusters 20. In this step, for each identified task cluster, an Al agent is either selected from a repository of existing agents or a new agent is created to match the requirements of the task cluster. The next step in the process involves deploying the Al agents to edge devices 30. Here, the mapped or newly created Al agents are configured and installed on edge devices associated with their respective task clusters in the manufacturing environment. After deployment, the method continues with a step of monitoring the performance of the deployed Al agents 40. This step involves collecting feedback data and evaluating how well the Al agents are performing their assigned tasks within their respective clusters. The final step shown in the flowchart is adapting or replacing the deployed Al agents 50. Based on the performance data and feedback collected in the previous step, this step involves either fine-tuning the existing Al agents to improve their performance or replacing them with more suitable agents if necessary.

## Claims

1. A computer-implemented method for coordinating task-specific artificial intelligence (AI) agents in a manufacturing workflow, the method comprising:
identifying a plurality of task clusters (10) in the manufacturing workflow;
for each task cluster of the plurality of task clusters with the help of a main Al model:
mapping an Al agent from a repository of Al agents to the task cluster or creating a new Al agent for the task cluster (20);
deploying the Al agent to an edge device associated with the task cluster (30);
preferably monitoring performance of the deployed Al agents and collecting feedback data (40);
preferably adapting or replacing at least one of the deployed Al agents based on the collected feedback data (50).

2. The method of claim 1, further comprising:
fine-tuning the Al agent based on specific environmental conditions and requirements of the task cluster before deploying the Al agent (30).

3. The method of claim 1 or 2, wherein identifying the plurality of task clusters (10) comprises categorizing tasks based on at least one of: request priority, task complexity, geographical location, environmental factors, and historical trends.

4. The method of any of claims 1 to 3, wherein the main Al model is configured to:
analyze characteristics of each task cluster;
determine optimal Al agent configurations for each task cluster;
coordinate interactions between multiple Al agents across different task clusters;
continuously learn and adapt based on feedback from deployed Al agents.

5. The method of any of claims 1 to 4, wherein mapping the Al agent (20) comprises:
analyzing requirements of the task cluster;
searching the repository for an Al agent that matches the requirements of the task cluster.

6. The method of any of claims 1 to 5, wherein creating the new Al agent (20) comprises:
selecting a generic Al model from a pool of generic Al models;
training the generic Al model using task-specific data to create the new Al agent.

7. The method of claim 2, wherein fine-tuning the Al agent comprises:
adjusting parameters of the Al agent based on historical data from a digital twin of the manufacturing workflow.

8. The method of any of claims 1 to 7, wherein deploying the Al agent (30) comprises:
configuring the Al agent based on available computing resources of the edge device.

9. The method of claim 8, wherein configuring the Al agent comprises performing at least one of: model pruning, quantization, and knowledge distillation.

10. The method of any of claims 1 to 9, further comprising:
defining a workflow for collaboration between multiple Al agents deployed to different task clusters.

11. The method of any of claims 1 to 10, wherein adapting the at least one deployed Al agent (50) comprises:
further fine-tuning the at least one deployed Al agent based on the collected feedback data.

12. The method of any of claims 1 to 11, wherein replacing the at least one deployed Al agent (50) comprises:
selecting a different Al agent from the repository that better matches updated requirements of the corresponding task cluster.

13. The method of any of claims 1 to 12, further comprising:
simulating performance of the Al agent using a digital twin of the manufacturing workflow before deploying the Al agent (30).

14. A computer program comprising instructions which, when executed by a computer, cause the computer to carry out the method of any of claims 1 to 13.

15. A computer-readable medium comprising instructions which, when executed by a computer, cause the computer to carry out the method of any of claims 1 to 13.

16. A system for dynamically generating and coordinating task-specific artificial intelligence (AI) agents in a manufacturing workflow, the system comprising:
a processor; and
a memory comprising instructions stored thereon which, when executed by the processor, cause the system to perform the method of any of claims 1 to 13.

17. The system of claim 16, further comprising:
a plurality of edge devices, each edge device associated with a task cluster and configured to execute a deployed Al agent (30).
